# EUROPEAN PATENT APPLICATION

(11) **EP 3 865 698 A1**
(43) Date of publication of application: **18.08.2021**
(21) Application number: 21153518.2
(22) Date of filing: 26.01.2021
(51) Int. Cl.: F02D 41/40, F02D 41/30, F02D 41/20, F02D 41/28, F02D 35/02, F02D 37/02, F02D 41/00

(54) **CONTROL DEVICE FOR ROTATION OUTPUT DEVICE**

(30) Priority: 14.02.2020 JP 2020023260
(71) Applicant: MAZDA MOTOR CORPORATION, Hiroshima 730-8670 (JP)
(72) Inventor: HARADA, Yasuhiro, Hiroshima, 730-8670 (JP)
(74) Representative: Behr, Wolfgang

(57) **Abstract**

The control device includes an integrated circuit (110) that receives a control signal from a central computing device (10) and operates an actuator (A) based on the received control signal. The central computing device (10) has a memory (102) in which a model (102a,102b,102c) representing the operation pattern of the actuator (A) is stored, the control signal includes the desired operation pattern of the actuator (A) that is based on the model (102a,102b,102c) and the desired operation start time (Tr1,Tr2) of the desired operation pattern, and the integrated circuit (110) controls the operation of the actuator (A) using the desired operation pattern at the desired operation start time (Tr1,Tr2) and receives the control signal representing the next operation pattern and the operation start time (Tr1,Tr2) after the desired operation pattern is executed or while the desired operation pattern is executed.

## Description

### [Technical Field]

The technology disclosed herein relates to a technical field concerning a control device for a rotation output device.

### [Background Art]

In recent years, autonomous drive systems have been developed nationally and almost all actuators installed in vehicles are electronically controlled.

For example, patent document 1 discloses a multiplex communication device in which sub ECUs (electronic control units) are provided in individual doors of a vehicle, the main ECU that manages the sub ECUs is provided, the main ECU outputs request signals to the sub ECUs, and the sub ECUs output control signals to individual actuators (such as motors).

### [Prior Art Documents]

### [Patent documents]

[Patent document 1] JP-A-2016-174245

### [Summary of the Invention]

### [Problem to be solved by the invention]

However, in the structure in which an ECU is provided for each device in a vehicle, the number of dedicated ECUs is enormous and one vehicle has several hundreds of ECUs for a model with many ECUs. Accordingly, the number of wires and connectors for connection between individual ECUs and between individual ECUs and sensors also increases. As a result, the structure of the communication system of the vehicle becomes complicated and the cost increases.

Accordingly, integration of ECUs that generate control signals for individual actuators into one computing device is considered. However, fine control is required for the actuators constituting a rotation output device that generates rotational power, such as an internal combustion engine or a motor. Accordingly, even if the individual ECUs are simply integrated into one computing device, the communication between the actuators and the calculation device takes much time, thereby degrading responsiveness.

The technology, method and computer program product disclosed herein addresses such problems with an object of controlling the actuators constituting a rotation output device responsively even if a plurality of ECUs is integrated into one computing device.

### [Means for solving the Problem]

To solve the above problems, according to the technique disclosed herein, there is provided a control device for a rotation output device with a rotary shaft, the control device including an integrated circuit that receives a control signal from a central computing device via a communication path and that operates an actuator of the rotation output device based on the received control signal, in which the central computing device has a storage unit in which a model representing an operation pattern of the actuator is stored, the control signal is a signal including a desired operation pattern of the actuator that is based on the model and a desired operation start time of the desired operation pattern, and the integrated circuit controls an operation of the actuator using the desired operation pattern at the desired operation start time and receives the control signal representing a next operation pattern and an operation start time of the next operation pattern after the desired operation pattern is executed or while the desired operation pattern is executed.

According to this structure, the control signal generated by using the model in the central computing device is input in advance to the integrated circuit that controls the operation of the actuator included in the rotation output device. The integrated circuit only needs to start controlling the actuator at the desired operation start time included in the control signal. Accordingly, the central computing device does not need to control the actuator through full-time communication. This reduces the computing resources and the communication capacity used by the central computing device to control the actuator. As a result, the central computing device can control the actuator responsively.

Preferably, the control device for a rotation output device further includes a phase angle detection unit configured to detect a phase angle of the rotary shaft, the desired operation start time contained in the control signal is set as a phase angle of the rotary shaft, and the integrated circuit controls the operations of the actuator using a corresponding operation pattern when the phase angle of the rotary shaft reaches the phase angle corresponding to the operation start time contained in the control signal.

According to this structure, the actuators can be controlled by using the phase angle of the rotary shaft of the rotation output device as a trigger. Accordingly, the central computing device only needs to generate information about the phase angle of the rotary shaft as information concerning the operation start time. Therefore, the computing resources of the central computing device can be further reduced.

In an embodiment of the control device for a rotation output device, preferably, the rotation output device is an internal combustion engine that rotates a crankshaft as the rotary shaft by reciprocating motion of a piston.

In an embodiment of the present invention, the desired operation start time is set to a top dead center or a bottom dead center of the piston or to a phase angle defined with respect to top dead center or a bottom dead center of the piston.

That is, particularly many actuators are used and fine control is required for the rotation control of an internal combustion engine. Accordingly, the resources of the central computing device are significantly reduced by performing model control as described above. This can more appropriately produce the effect of controlling the actuators responsively through the central computing device.

In the control device for a rotation output device, preferably, the integrated circuit generates an electric signal representing the desired operation pattern based on the control signal received from the central computing device and outputs the generated electric signal to the actuator or a plurality of actuators.

According to this structure, the integrated circuit only needs to have the function of correcting the control signal to an appropriate electric signal and a highly versatile integrated circuit can be used. This can improve the cost effectiveness of the control device.

### [Advantage of the invention]

In an embodiment of the present invention, the control device is part of a vehicle, in particular of an automobile.

In an embodiment of the present invention, the vehicle adopts a by-wire system that electrically performs drive control, braking control, and/or steering control.

In an embodiment of the present invention, the rotation output device is an engine, a drive motor or a transmission.

In an embodiment of the present invention, the control signal is sent in advance of the desired operation start time from the central computing device to the integrated circuit that controls the actuator.

In an embodiment of the present invention, the control device comprises a plurality of actuators controlled by the central computing device via control signals sent to respective integrated circuits. The actuators in particular comprise a plurality of spark plugs and/or a plurality of fuel injectors. The integrated circuits preferably comprise at least a spark plug integrated circuit and an injector integrated circuit.

In an embodiment of the present invention, the integrated circuits have the same structure.

In an embodiment of the present invention, the central computing device is configured to transmit the control signals to the integrated circuits in a time division manner.

In an embodiment of the present invention, the central computing device is configured to assign identification numbers to the control signals in advance so that the integrated circuits can receive the control signals by recognizing the identification numbers.

In an embodiment of the present invention, the central computing device is configured to use a cylinder state estimation model based on information from sensors.

In an embodiment of the present invention, the central computing device is configured to correct the cylinder state estimation model according to the difference between a cylinder temperature calculated based on the cylinder state estimation model and a cylinder temperature calculated based on the detection result of a cylinder pressure sensor.

In an embodiment of the present invention, the central computing device is configured to use a predetermined ignition model to calculate the target ignition time of a spark plug so as to achieve a target autoignition time and is further configured to generate an ignition control signal comprising an operation start time of the ignition pattern.

In an embodiment of the present invention, the predetermined ignition model is configured to receive information from the cylinder state estimation model.

In an embodiment of the present invention, the central computing device is configured to use a predetermined fuel supply model to calculate a fuel injection amount and to calculate a start time of an injection and is further configured to generate an injection control signal comprising an operation start time of the injection pattern.

In an embodiment of the present invention, the predetermined fuel supply model is configured to receive information from the cylinder state estimation model.

In an embodiment of the present invention, the rotation output device performs a SPCCI combustion in which spark ignition combustion is combined with compression ignition combustion in operating regions. The central computing device generates control signals for a plurality of actuators using models stored in a memory of the central computing device based on information obtained from sensors so as to achieve the SPCCI combustion in the operating regions.

The present application further comprises a method for controlling a control device, in particular a control device as described above, the control device comprising an integrated circuit configured to receive a control signal from a central computing device via a communication path and to operate an actuator of the rotation output device based on the received control signal. The central computing device has a storage unit in which a model representing an operation pattern of the actuator is stored. The control signal is a signal including a desired operation pattern of the actuator that is based on the model and a desired operation start time of the desired operation pattern. The method comprises controlling an operation of the actuator by the integrated circuit using the desired operation pattern at the desired operation start time and receiving the control signal by the integrated circuit, the control signal representing a next operation pattern and an operation start time of the next operation pattern after the desired operation pattern is executed or while the desired operation pattern is executed.

The present application further comprises a computer program product to be installed in the control device and to execute the method described above.

As described above, according to the technology, method and computer program product disclosed herein, even if a plurality of ECUs is integrated into one computing device, the actuators constituting the rotation output device can be controlled responsively.

### [Brief Description of the Drawings]

[Fig. 1] Fig. 1 is a schematic diagram illustrating a communication path of a vehicle having a control device according to an exemplary embodiment.
[Fig. 2] Fig. 2 is a schematic structure diagram illustrating an engine controlled by the control device.
[Fig. 3] Fig. 3 is a sectional view illustrating the combustion chamber of the engine.
[Fig. 4] Fig. 4 is a block diagram illustrating the control system of the engine.
[Fig. 5] Fig. 5 is a schematic diagram illustrating model predictive control by a central computing device.
[Fig. 6] Fig. 6 is a diagram schematically illustrating the function of a spark plug IC.
[Fig. 7] Fig. 7 is a diagram schematically illustrating the function of an injector IC.
[Fig. 8] Fig. 8 is a time chart illustrating the operations of the spark plug IC and the injector IC.

### [Modes for Carrying Out the Invention]

An exemplary embodiment will be described in detail below with reference to the drawings.

### (Structure of communication path)

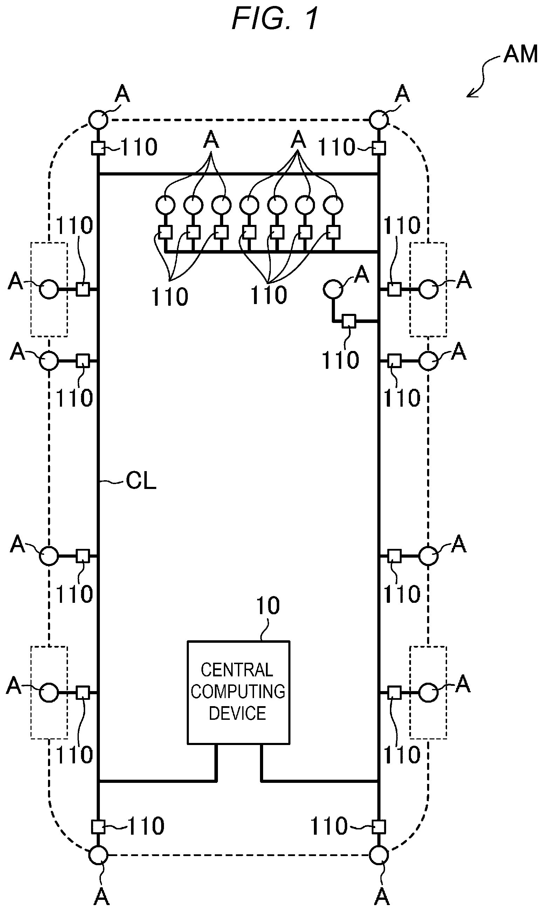

Fig. 1 illustrates the communication path of a vehicle AM having a control device according to an embodiment. Actuators A illustrated in Fig. 1 are some of the actuators provided in the vehicle AM and do not represent all of the actuators of the vehicle AM. In addition, a communication line CL illustrated in Fig. 1 also represents only a part of the entire communication line of the vehicle AM.

The vehicle AM illustrated in Fig. 1 is an automobile that enables manual driving performed by the driver's operation, assisted driving that assists the driver's operation, and automatic driving performed without the driver's operation. This vehicle AM adopts a by-wire system that electrically performs drive control, braking control, and steering control. That is, in the vehicle AM, an operation of the accelerator pedal, an operation of the brake pedal, and an operation of the steering wheel are detected by sensors. Then, the actuators A responsible for individual types of control are controlled by the control signals generated based on the outputs of the sensors by a central computing device 10.

The actuators A include, for example, an injector 6, an intake electric S-VT 23, an exhaust electric S-VT 24, a spark plug 25, a throttle valve 43, an electromagnetic clutch 45 of a supercharger 44, an EGR valve 54, and the like that are provided in an engine 1. The actuators A also include braking devices provided in individual wheels, a power steering device for assisting a steering operation, power window devices provided in individual doors, lamps provided on the front side portion and the rear side portion of the vehicle AM, and the like. Details on the actuators A provided in the engine 1 will be described later.

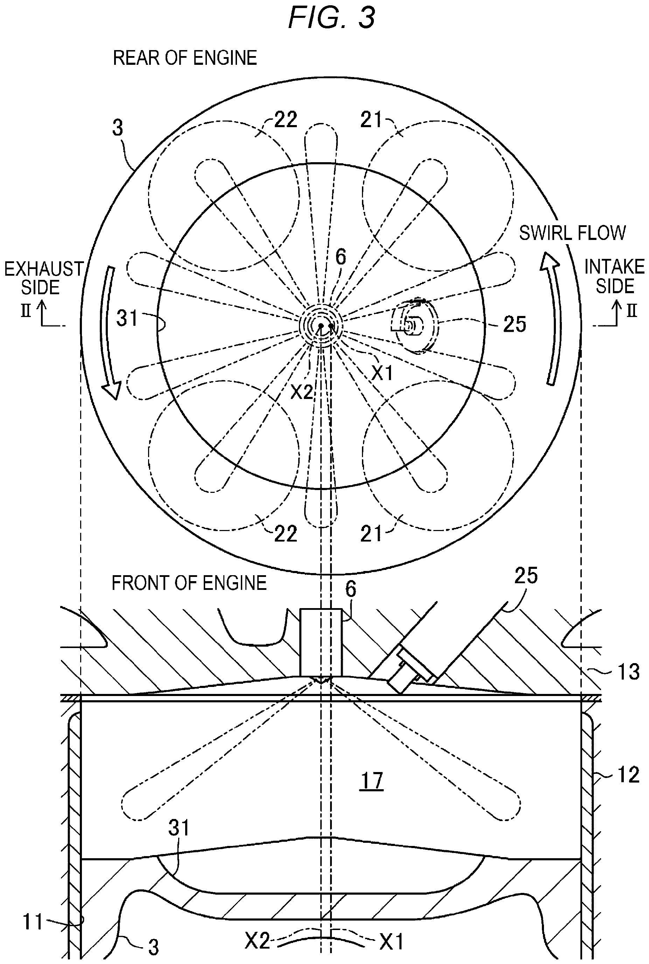

The individual actuators A are electrically connected to the central computing device 10 via the communication line CL. In the embodiment, the central computing device 10 and the individual actuators A are connected to each other without intervention of other ECUs (electrical control units). That is, all of the control signals for controlling the individual actuators A are generated by the central computing device 10. Information from a plurality of sensors (some of them are illustrated in Fig. 3) provided in the vehicle AM is input to the central computing device 10. The individual sensors are electrically connected to the central computing device 10 via the communication line CL. The communication line CL has a communication speed of 1 Gbps or higher.

Although the central computing device 10 is disposed in the rear portion of the vehicle AM in Fig. 1, the disposition of the central computing device 10 is not limited to this example. The central computing device 10 may also be disposed in the front portion or in the middle portion in the front-rear direction of the vehicle AM.

The individual actuators A are connected to integrated circuits 110 that receive the control signals from the central computing device 10 via the communication line CL and operate individual actuators A based on the received control signals. As described in detail later, the individual integrated circuits 110 output electric signals for actually operating the corresponding actuators A based on the control signals received from the central computing device 10.

### (Structure of engine)

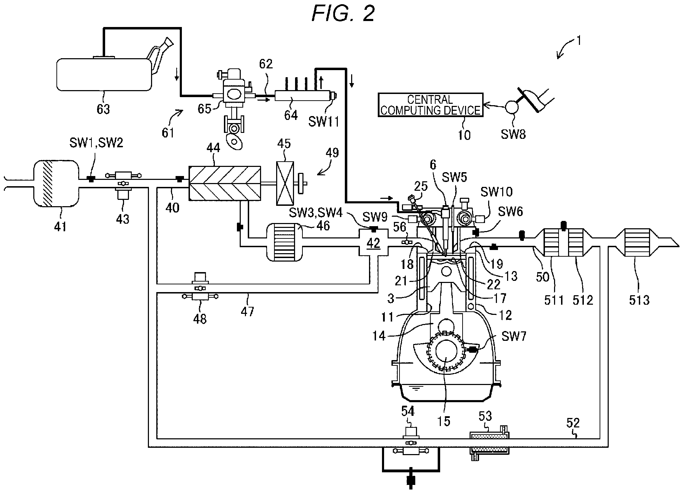

Fig. 2 is a diagram illustrating the engine. Fig. 3 is a diagram illustrating the combustion chamber of the engine. It should be noted here that the intake side in Fig. 2 is on the left side on the sheet and the exhaust side is on the right side on the drawing. The intake side in Fig. 3 is on the right side on the sheet and the exhaust side is on the left side on the drawing.

The engine 1 has a combustion chamber 17. In the combustion chamber 17, an intake stroke, a compression stroke, an expansion stroke, and an exhaust stroke are repeated. The engine 1 is a four-stroke engine. The vehicle AM travels by driving the engine 1. The fuel for the engine 1 is gasoline in this structure example. The fuel may be a liquid fuel containing at least gasoline. The gasoline as the fuel may be a regular fuel or a high-octane fuel. The fuel may be gasoline containing, for example, bioethanol.

The engine 1 includes a cylinder block 12 and a cylinder head 13. The cylinder head 13 is placed on the cylinder block 12.

A plurality of cylinders 11 is formed in the cylinder block 12. The engine 1 is a multi-cylinder engine. Fig. 2 and 3 illustrate only one cylinder 11.

Pistons 3 are inserted into the cylinders 11. The pistons 3 are coupled to a crankshaft 15 as the rotary shaft via connecting rods 14. The pistons 3 reciprocate inside the cylinders 11. The piston 3, the cylinder 11, and the cylinder head 13 form the combustion chamber 17. It should be noted here that the combustion chamber means the space formed by the piston 3, the cylinder 11, and the cylinder head 13 regardless of the position of piston 3.

The lower surface of the cylinder head 13 forms the ceiling of the combustion chamber 17. The ceiling includes two inclined surfaces as illustrated in the lower drawing in Fig. 2. The combustion chamber 17 is of so-called pent roof type.

The piston 3 has a cavity 31 recessed downward from the upper surface. The cavity 31 has a shallow dish shape in this structure example. The center of cavity 31 deviates to the exhaust side from a central axis X1 of the cylinder 11.

The geometric compression ratio of the engine 1 is set to 15 to 18. As described later, the engine 1 performs SPCCI combustion in which SI (spark ignition) combustion is combined with CI (compression ignition) combustion in some operating regions. SPCCI combustion controls CI combustion by heat generation and/or pressure rise due to SI combustion. The engine 1 is a compression ignition engine. This engine 1 does not need to raise the temperature in the combustion chamber 17 when the piston 3 reaches the compression top dead center.

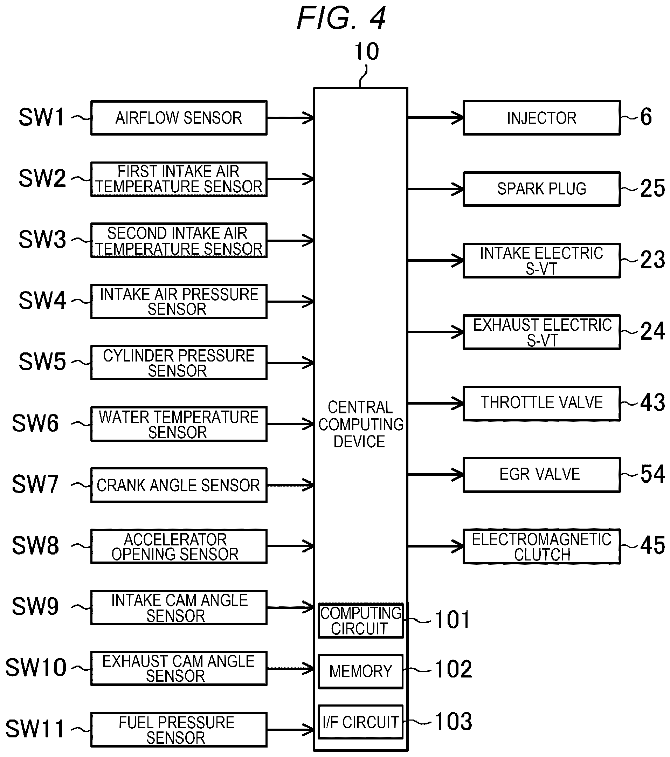

An intake valve 21 is provided in the intake port 18. The intake valve 21 opens and closes the intake port 18. The valve mechanism opens and closes the intake valve 21 at predetermined timings. The valve mechanism may be a variable valve mechanism in which the valve timing and/or the valve lift variable are variable. As illustrated in Fig. 4, the valve mechanism has the intake electric S-VT (sequential-valve timing) 23. The intake electric S-VT 23 continuously changes the rotational phase of the intake camshaft within a predetermined angular range. The valve opening angle of the intake valve 21 does not change. The valve opening angle of the intake valve 21 is, for example, 240°CA. It should be noted here that the valve mechanism may have a hydraulic S-VT instead of the electric S-VT.

An exhaust valve 22 is provided in an exhaust port 19. The exhaust valve 22 opens and closes the exhaust port 19. The valve mechanism opens and closes the exhaust valve 22 at predetermined timings. The valve mechanism may be a variable valve mechanism in which the valve timing and/or the valve lift are variable. As illustrated in Fig. 4, the valve mechanism has an exhaust electric S-VT 24. The exhaust electric S-VT 24 continuously changes the rotational phase of the exhaust camshaft within a predetermined angle range. The valve opening angle of the exhaust valve 22 does not change. The valve opening angle of the exhaust valve 22 is, for example, 240°CA. It should be noted here that the valve mechanism may have a hydraulic S-VT instead of the electric S-VT.

The intake electric S-VT 23 and the exhaust electric S-VT 24 adjust the length of the overlap period in which both the intake valve 21 and the exhaust valve 22 are open. By adjusting the length of the overlap period, the internal EGR (exhaust gas recirculation) gas is introduced to the combustion chamber 17.

The injector 6 is attached to the cylinder head 13 for each of the cylinders 11. The injector 6 injects fuel directly into the combustion chamber 17. The injector 6 is disposed at the center of the ceiling of the combustion chamber 17. More specifically, the injector 6 is disposed in the valley of the pent roof. As illustrated in Fig. 3, an injection axial center X2 of the injector 6 is located on the exhaust side of the central axis X1 of the cylinder 11. The injection axial center X2 of the injector 6 is parallel to the central axis X1. The injection axial center X2 of the injector 6 coincides with the center of the cavity 31. The injector 6 faces the cavity 31. It should be noted here that the injection axial center X2 of the injector 6 may coincide with the central axis X1 of the cylinder 11. In this structure, the injection axial center X2 of the injector 6 may coincide with the center of the cavity 31. The injector 6 is an example of the actuator.

The injector 6 is of multi-injection hole type having a plurality of injection holes. The injector 6 injects fuel radially and diagonally downward from the center of the ceiling of the combustion chamber 17, as illustrated by the dot-dot-dash lines in Fig. 3. The injector 6 has ten injection holes in this structure example. The ten injection holes are disposed at equal angular intervals in the circumferential direction.

A fuel supply system 61 is connected to the injector 6. The fuel supply system 61 includes a fuel tank 63 that stores fuel and a fuel supply path 62. The fuel supply path 62 connects the fuel tank 63 and the injector 6 to each other. A fuel pump 65 and a common rail 64 are provided in the fuel supply path 62. The fuel pump 65 transfers fuel to the common rail 64. The fuel pump 65 is a plunger pump driven by the crankshaft 15 in this structure example. The common rail 64 stores the fuel transferred from the fuel pump 65. The pressure in the common rail 64 is high. The injector 6 is connected to the common rail 64. When the injector 6 opens, the high-pressure fuel in the common rail 64 is injected into the combustion chamber 17 through the injection hole of the injector 6. The fuel supply system 61 in this structure example can supply fuel with a high pressure of 30 MPa or higher to the injector 6. The maximum pressure of the fuel supply system 61 may be set to, for example, 200 MPa. The fuel supply system 61 may change the fuel pressure according to the operating state of the engine 1. It should be noted here that the structure of the fuel supply system 61 is not limited to the structure described above.

A spark plug 25 is attached to the cylinder head 13 for each of the cylinders 11. The spark plug 25 forcibly ignites the air-fuel mixture in the combustion chamber 17. As illustrated in Fig. 3, the spark plug 25 is disposed on the intake side of the central axis X1 of the cylinder 11. The spark plug 25 is located between the two intake ports 18. The electrodes of the spark plug 25 face the inside of the combustion chamber 17. It should be noted here that the spark plug 25 may be disposed on the exhaust side of the central axis X1 of the cylinder 11. Alternatively, the spark plug 25 may be disposed in the central axis X1 of the cylinder 11.

An intake passage 40 is connected to one side of the engine 1. The intake passage 40 communicates with the intake ports 18 of the individual cylinders 11. The intake gas to be introduced to the combustion chamber 17 flows through the intake passage 40. An air cleaner 41 is provided at the upstream end of the intake passage 40. A surge tank 42 is provided near the downstream end of the intake passage 40. The portion of the intake passage 40 downstream of the surge tank 42 branches for each of the cylinders 11.

A throttle valve 43 is provided between the air cleaner 41 and the surge tank 42 in the intake passage 40. The throttle valve 43 adjusts the amount of fresh air to be introduced to the combustion chamber 17 by changing the opening of the valve.

In the intake passage 40, a supercharger 44 is also disposed downstream of the throttle valve 43. The supercharger 44 increases the pressure of the intake gas to be introduced to the combustion chamber 17. In this structure example, the supercharger 44 is driven by the engine 1. The supercharger 44 is of roots type, lysholm type, vane type, or centrifugal type. The supercharger 44 forms a part of the supercharging system.

The electromagnetic clutch 45 is provided between the supercharger 44 and the engine 1. The electromagnetic clutch 45 switches between the state in which a driving force is transferred from the engine 1 to the supercharger 44 and the state in which the transmission of a driving force is interrupted. The supercharger 44 is turned on or off by causing the central computing device 10 described later to output a control signal to the electromagnetic clutch 45. The electromagnetic clutch 45 forms a part of the supercharging system.

An intercooler 46 is provided downstream of the supercharger 44 in the intake passage 40. The intercooler 46 cools the intake gas compressed by the supercharger 44. The intercooler 46 is of water-cooled type or oil-cooled type. The intercooler 46 forms a part of the supercharging system.

A bypass passage 47 is connected to the intake passage 40. The bypass passage 47 connects the upstream portion of the supercharger 44 and the downstream portion of the intercooler 46 in the intake passage 40 to each other. The bypass passage 47 bypasses the supercharger 44 and the intercooler 46. An air bypass valve 48 is provided in the bypass passage 47. The air bypass valve 48 adjusts the flow rate of the gas flowing through the bypass passage 47.

The central computing device 10 fully opens the air bypass valve 48 when the supercharger 44 is off. The intake gas flowing through the intake passage 40 bypasses the supercharger 44 and the intercooler 46 and reaches the combustion chamber 17 of the engine 1. The engine 1 operates in a non-supercharged state, that is, a naturally aspirated state.

When the supercharger 44 is on, the engine 1 operates in a supercharged state. The central computing device 10 adjusts the opening of the air bypass valve 48 when the supercharger 44 is on. A part of the intake gas that has passed through the supercharger 44 and the intercooler 46 returns to the upstream side of the supercharger 44 through the bypass passage 47. When the central computing device 10 adjusts the opening of the air bypass valve 48, the pressure of the intake gas to be introduced to the combustion chamber 17 changes. It should be noted here that the "supercharged state" may be defined as the state in which the pressure in the surge tank 42 is higher than the atmospheric pressure and the "non-supercharged state" may be defined as the state in which the pressure in the surge tank 42 is equal to or lower than the atmospheric pressure.

An exhaust passage 50 is connected to the other side of the engine 1. The exhaust passage 50 communicates with the exhaust ports 19 of the individual cylinders 11. The exhaust gas discharged from the combustion chamber 17 flows through the exhaust passage 50. Although not illustrated specifically, the upstream portion of the exhaust passage 50 branches for each of the cylinders 11.

An exhaust gas purification system having multiple catalytic converters is provided in the exhaust passage 50. Although not illustrated, these catalytic converters are disposed in the engine room. The catalytic converter on the upstream side has a three-way catalyst 511 and a GPF (gasoline particulate filter) 512. The catalytic converter on the downstream side has a three-way catalyst 513. It should be noted here that the exhaust gas purification system is not limited to the structure illustrated in the drawing. For example, the GPF may be omitted. In addition, the catalytic converter is not limited to that having a three-way catalyst. Furthermore, the order of the three-way catalyst and the GPF may be changed as appropriate.

An EGR passage 52 is connected between the intake passage 40 and the exhaust passage 50. The EGR passage 52 is a passage through which a part of exhaust gas flows back to the intake passage 40. The upstream end of the EGR passage 52 is connected between the two catalytic converters in the exhaust passage 50. The downstream end of the EGR passage 52 is connected to the portion of the intake passage 40 upstream of the supercharger 44.

A water-cooled EGR cooler 53 is provided in the EGR passage 52. The EGR cooler 53 cools exhaust gas. An EGR valve 54 is also provided in the EGR passage 52. The EGR valve 54 adjusts the flow rate of the exhaust gas flowing through the EGR passage 52. The EGR valve 54 adjusts the amount of backflow of external EGR gas.

### (Structure of engine control system)

As described above, the control signal that controls the engine 1 is generated by the central computing device 10. The central computing device 10 is, for example, a processor including one or more chips. The central computing device 10 includes a computing circuit 101, a memory 102 including a RAM (random access memory) and a ROM (read only memory), and an I/F circuit 103 through which electric signals are input or output. The central computing device 10 may have an AI (artificial intelligence) function.

The memory 102 stores models representing the operation patterns of the individual actuators of the engine 1. Details on the models will be described later.

As illustrated in Figs. 2 and 4, various sensors SW1 to SW12 are connected to the central computing device 10. The sensors SW1 to SW12 output signals to the central computing device 10. The sensors include the following sensors.

The airflow sensor SW1 measures the flow rate of fresh air flowing through the intake passage 40. The airflow sensor SW1 is disposed downstream of the air cleaner 41 in the intake passage 40.

The first intake air temperature sensor SW2 measures the temperature of fresh air flowing through the intake passage 40. The first intake air temperature sensor SW2 is disposed downstream of the air cleaner 41 in the intake passage 40.

The second intake air temperature sensor SW3 measures the temperature of the intake gas to be introduced to the combustion chamber 17. The second intake air temperature sensor SW3 is attached to the surge tank 42.

The intake air pressure sensor SW4 measures the pressure of the intake gas to be introduced to the combustion chamber 17. The intake air pressure sensor SW4 is attached to the surge tank 42.

The cylinder pressure sensor SW5 measures the pressure in each of the combustion chambers 17. The cylinder pressure sensor SW5 is attached to the cylinder head 13 for each of the cylinders 11.

The engine water temperature sensor SW6 measures the temperature of the cooling water that cools the combustion chamber 17. The engine water temperature sensor SW6 is attached so as to face the water jacket of the engine 1.

The crank angle sensor SW7 (phase angle detection unit) measures the rotation angle of the crankshaft 15. The crank angle sensor SW7 is attached to the engine 1.

The accelerator opening sensor SW8 measures the accelerator opening corresponding to the amount of operation of the accelerator pedal. The accelerator opening sensor SW8 is attached to the accelerator pedal mechanism.

The intake cam angle sensor SW9 measures the rotation angle of the intake camshaft. The intake cam angle sensor SW9 is attached to the engine 1.

The exhaust cam angle sensor SW10 measures the rotation angle of the exhaust camshaft. The exhaust cam angle sensor SW10 is attached to the engine 1.

The fuel pressure sensor SW11 measures the pressure of the fuel to be supplied to the injector 6. The fuel pressure sensor SW11 is attached to the common rail 64 of the fuel supply system 61.

The intercooler water temperature sensor SW12 measures the temperature of the cooling water circulating through the intercooler 46. The intercooler water temperature sensor SW12 is attached to the engine 1.

The ECU 10 determines the operating state of the engine 1 based on the signals from these sensors SW1 to SW12. The ECU 10 also calculates the control amounts of individual devices according to predefined control logic. The control logic is stored in the memory 102.

The ECU 10 transmits electric signals concerning the control amount to the injector 6, the spark plug 25, the intake electric S-VT 23, the exhaust electric S-VT 24, the throttle valve 43, the EGR valve 54, the electromagnetic clutch 45 of the supercharger 44, and the like.

### (Overview of model predictive control)

The central computing device 10 generates control signals for the individual actuators using models stored in the memory 102 based on the information obtained from various sensors so as to achieve SPCCI combustion in some operating regions. For example, the central computing device 10 estimates the state in the cylinder using a cylinder state estimation model 102a based on the information obtained from individual sensors. The central computing device 10 generates a control signal including the desired operation pattern of the spark plug 25 and the desired operation start time of the desired operation pattern using an ignition model 102b based on the estimated cylinder state. The central computing device 10 generates a control signal including the desired operation pattern of the injector 6 and the desired operation start time of the desired operation pattern using a fuel supply model 102c.

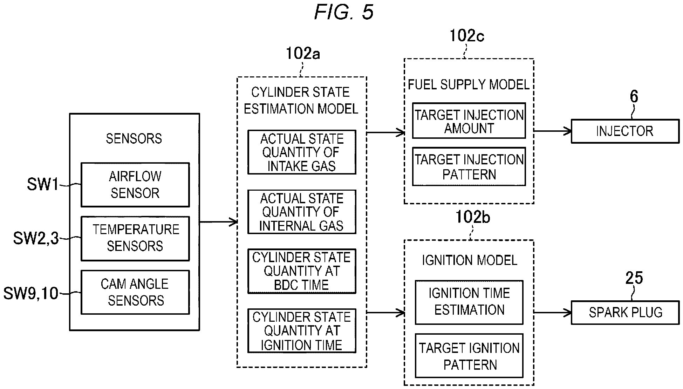

Fig. 5 schematically illustrates the model predictive control performed by the central computing device 10. In this model predictive control, the central computing device 10 first obtains the intake air amount detected by the airflow sensor SW1, the intake air temperatures detected by the first intake air temperature sensor SW2 and the second intake air temperature sensor SW3, the rotation angles of the intake camshaft and the exhaust camshaft detected by the intake cam angle sensor SW9 and the exhaust cam angle sensor SW10, and the like. The central computing device 10 calculates the actual state quantity (for example, the temperature and the pressure of the intake gas) of the intake gas (fresh air) based on the intake air amount and the like that correspond to the detection results of these sensors. In addition, the central computing device 10 calculates the actual state quantity (for example, the temperature and the pressure of the internal EGR gas) of the internal EGR gas based on the phase angles of the intake electric S-VT 23 and the exhaust electric S-VT 24 that correspond to the rotation angles of the intake camshaft and the exhaust camshaft.

Next, the central computing device 10 calculates the cylinder temperature at the closing time (referred to below as the IVC time) of the intake valve 21 using the cylinder state estimation model 102a based on the calculated state quantity of the intake gas and the calculated state quantity of the internal EGR gas. The central computing device 10 calculates the cylinder temperature at the occurrence of autoignition based on the calculated cylinder temperature at the IVC time and obtains the time (that is, the start time of CI combustion) of occurrence of autoignition. The time of occurrence of autoignition can be calculated by considering the polytropic process in thermodynamics. Since a known method (for example, the method described in JP-A-2018-84181) can be adopted as a specific calculation method, detailed description thereof is omitted.

The central computing device 10 calculates the intake air filling amount, the oxygen concentration in the cylinder, and the like in addition to the cylinder temperature as the state quantities in the cylinder. It should be noted here that this cylinder state estimation model 102a is corrected as appropriate according to the difference between the cylinder temperature calculated based on the cylinder state estimation model 102a and the cylinder temperature calculated based on the detection result of the cylinder pressure sensor SW5. This updates the cylinder state estimation model 102a to a model that can estimate the actual cylinder state with higher accuracy.

The central computing device 10 calculates the target ignition time of the spark plug 25 so as to achieve the target autoignition time by using the predetermined ignition model 102b based on the calculated time of occurrence of autoignition. Then, the central computing device 10 generates a control signal (referred to below as an ignition control signal) representing an ignition pattern that causes ignition at the target ignition time. This ignition control signal includes information representing the operation start time of the ignition pattern, that is, the time (the trigger Tr1 described later) at which the integrated circuit (referred to below as the spark plug IC 111) corresponding to the spark plug 25 outputs an electric signal to the spark plug 25.

The central computing device 10 calculates the fuel injection amount from the injector 6 based on the calculated intake air filling amount and the calculated oxygen concentration in the cylinder in parallel with generating the control signal for the spark plug 25 as described above. Specifically, the central computing device 10 calculates the fuel injection amount using a predetermined fuel supply model 102c so that the air-fuel ratio of the exhaust gas after combustion equals the theoretical air-fuel ratio (that is, λ = 1). Then, the central computing device 10 generates a control signal (referred to below as an injection control signal) representing the injection pattern of fuel from the injector 6 using the predetermined fuel supply model 102c. This injection control signal includes information representing the operation start time of the injection pattern, that is, the time (the trigger Tr2 described later) when the integrated circuit (referred to below as the injector IC 112) corresponding to the injector 6 outputs an electric signal to the injector 6.

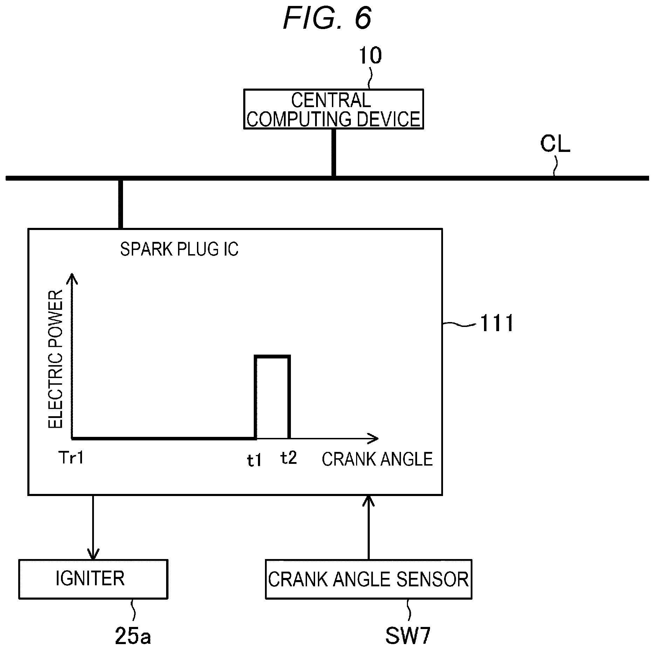

The ignition control signal output from the central computing device 10 is input to the spark plug IC 111. As illustrated in Fig. 6, the spark plug IC 111 generates an electric signal representing a desired ignition pattern based on the input control signal. In the ignition pattern illustrated in Fig. 6, the spark plug IC 111 generates (that is, starts ignition) the electric signal that supplies electric power to an igniter 25a of the spark plug 25 at time t1 after the time corresponding to the trigger Tr1 and interrupts (that is, ends ignition) the supply of the electric power at time t2. That is, the ignition pattern also includes the period for which electric power is not supplied. The spark plug IC 111 starts outputting the electric signal to the igniter 25a at the time correspond to the trigger Tr1 and stops outputting the electric signal immediately after time t2. It should be noted here that the ignition pattern indicated here is an example and the ignition pattern is changed as appropriate according to the operating state of the engine 1.

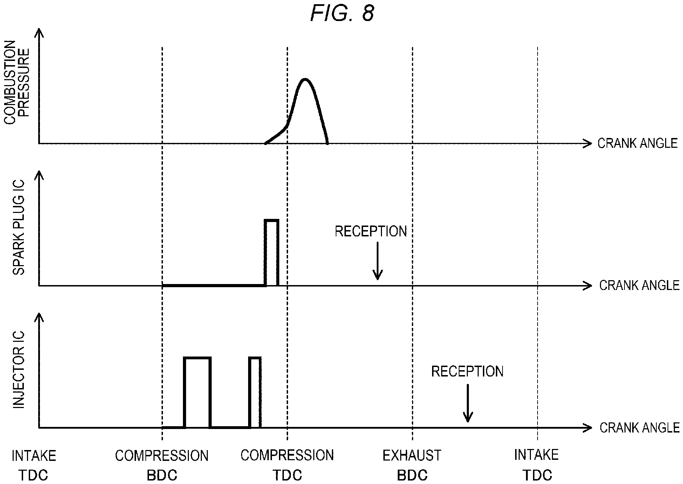

In the embodiment, the trigger Tr1 is set to, for example, the time (the start time of the compression stroke) at which the piston 3 is located at the bottom dead center of the compression stroke. The detection result of the crank angle sensor SW7 is input to the spark plug IC 111. The spark plug IC 111 starts outputting an electric signal to the igniter 25a when receiving a detection signal indicating that the piston 3 has reached the bottom dead center of the compression stroke from the crank angle sensor SW7. As illustrated in Fig. 8, time t1 is, for example, the time at which the piston 3 is located 15° before the top dead center of the compression stroke and time t2 is the time at which the piston 3 advances 10° in crank angle from time t1. It should be noted here that the time of the trigger Tr1 is not limited to the time at which the piston 3 is located in the bottom dead center of the compression stroke and can be arbitrarily determined.

The spark plug IC 111 receives a control signal representing the next ignition pattern from the central computing device 10 while not outputting an electric signal to the igniter 25a. For example, as illustrated in Fig. 8, the spark plug IC 111 receives the control signal representing the next ignition pattern from the central computing device 10 by the next trigger Tr1 after the output of the electric signal is stopped, that is, before the piston 3 reaches the bottom dead center of the next compression stroke immediately after time t2. When the ignition pattern is changed, the period for which the spark plug IC 111 receives the next control signal from the central control device 10 is also changed.

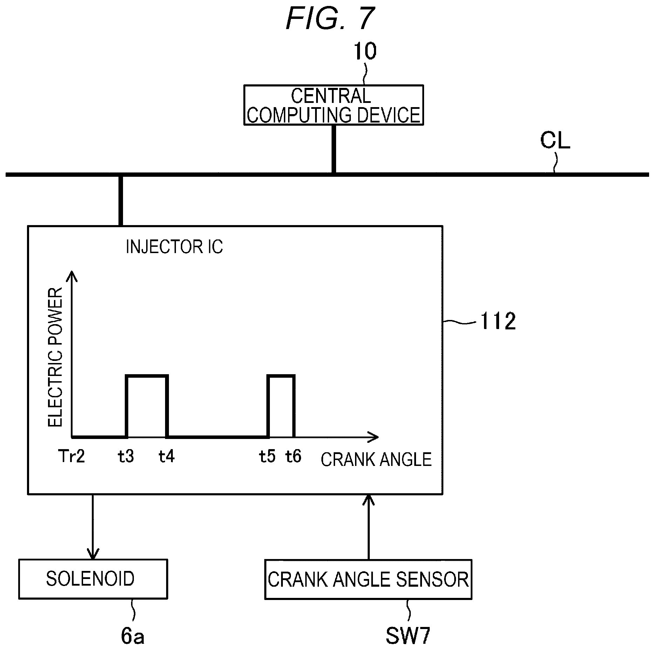

On the other hand, the injection control signal output from the central computing device 10 is input to the injector IC 112. As illustrated in Fig. 7, the injector IC 112 generates an electric signal representing a desired injection pattern based on the input control signal. In the injection pattern illustrated in Fig. 7, the injector IC 112 generates the electric signal that supplies (that is, starts fuel injection) electric power to a solenoid 6a of the injector 6 at time t3 after the time corresponding to the trigger Tr2, temporarily interrupts (that is, ends fuel injection) the supply of the electric power at time t4, supplies electric power to the solenoid 6a again at time t5, and interrupts the supply of the electric power at time t6. That is, the injection pattern also includes the period for which electric power is not supplied. The injector IC 112 starts outputting the electric signal to the solenoid 6a at the time corresponding to the trigger Tr2 and stops the output of the electric signal immediately after time t6. It should be noted here that the injection pattern illustrated here is an example and the injection pattern is changed as appropriate according to the operating state of the engine 1.

In the embodiment, the trigger Tr2 is set to, for example, the time (the start time of the compression stroke) at which the piston 3 is located at the bottom dead center of the compression stroke. The detection result of the crank angle sensor SW7 is input to the injector IC 112. The injector IC 112 starts outputting an electric signal to the solenoid 6a when receiving a detection signal indicating that the piston 3 has reached the bottom dead center of the compression stroke from the crank angle sensor SW7. As illustrated in Fig. 8, any of time t3 to time t6 is included in, for example, the period of the compression stroke. It should be noted here that the time of the trigger Tr2 is not limited to the time at which the piston 3 is located in the bottom dead center of the compression stroke and can be arbitrarily determined. For example, in the case of an injection pattern in which fuel is injected in the intake stroke, the time of the trigger Tr2 is set to the time (the start time of the intake stroke) at which the piston 3 is located at the top dead center of the intake stroke. Accordingly, when the injection pattern is different for each operating region of the engine 1, the time of the trigger Tr2 may be changed. Alternatively, the time of the trigger Tr2 may be fixed to the time at which the piston 3 is located at the top dead center of the intake stroke.

The injector IC 112 receives a control signal representing the next ignition pattern from the central computing device 10 while not outputting an electric signal to the solenoid 6a. For example, as illustrated in Fig. 8, the injector IC 112 receives the control signal representing the next ignition pattern from the central computing device 10 by the next trigger Tr2 after the output of the electric signal is stopped, that is, before the piston 3 reaches the bottom dead center of the next compression stroke immediately after time t6. When the ignition pattern is changed, the period for which the injector IC 112 receives the next control signal from the central control device 10 is also changed.

Similarly, control using a model is also performed in the intake electric S-VT 23, the exhaust electric S-VT 24, the throttle valve 43, the EGR valve 54, the electromagnetic clutch 45 of the supercharger 44, and the like. The integrated circuit 110 provided in each of the actuators A receives the next control signal from the central computing device 10 while the actuator A does not operate or operates. For example, the valve that continuously changes the opening, such as the throttle valve 43 or the ECR valve 54 receives the next control signal while the valve operates.

As described above, the integrated circuit 110 corresponding to each of the actuators A controls the operation of the corresponding actuator A using a desired operation pattern at a desired operation start time and, after the desired operation pattern ends, receives the control signal representing the next operation pattern and the operation start time. In particular, in the embodiment, each of the integrated circuits 110 controls the operation of each of the actuators using the corresponding operation pattern when the phase angle of the crankshaft 15 reaches the phase angle representing the operation start time of each of the control signals. In the above description, the individual integrated circuits 110 are distinguished like the spark plug IC 111 and the injector IC 112 for convenience sake, but the integrated circuits 110 having the same structure can be used actually. Accordingly, the cost of components constituting the control system can be considerably reduced.

The timings at which the individual integrated circuits 110 receive the control signals can be set arbitrarily. As illustrated in Fig. 8, by deviating the reception timings, the central computing device 10 can transmit the control signals in a time division manner and suppress the confusion of the control signals. When transmitting the control signals at the same time, the central computing device 10 only needs to assign identification numbers to the control signals in advance so that the individual integrated circuits 110 can receive the control signals by recognizing the identification numbers. Even when such a method is used, there is little impact on cost because the integrated circuits 110 can have the same hardware structure.

When the control signals for the individual actuators A of the rotation output device (such as the engine 1) that generates rotational power are generated by one central computing device 10, the communication between the actuators A and the central computing device 10 takes time, possibly causing degradation of responsiveness.

However, in the embodiment, the central computing device 10 does not need to communicate with the actuators A in full time by inputting the control signals from the central computing device 10 in advance to the integrated circuits 110 that control the operations of the actuators A that constitute the engine 1. This reduces the computing resources and the communication capacity required for the central computing device 10 to control the individual actuators A. As a result, the central computing device 10 can control the individual actuators A responsively.

In addition, in the embodiment, the integrated circuits 110 generate electric signals representing desired operation patterns based on the signals received from the central computing device 10 and output the generated electric signals to the individual actuators A. As described above, since the integrated circuits 110 only need to have the function of modifying the control signals into electric signals that operate the actuators A, a highly versatile integrated circuits can be used. This can improve the cost effectiveness of the control device.

The technology disclosed herein is not limited to the embodiment described above and can be applied to another embodiment without departing from the spirit of the claims.

For example, in the embodiment described above, the engine 1 is represented as the rotation output device. The rotation output device is not limited to this and may be a drive motor or a transmission.

The embodiment described above is only an example and the scope of the present disclosure should not be construed in a limited manner. The scope of the present disclosure is defined by appended claims and all modifications and changes belonging to the equivalent scope of the appended claims fall within the scope of the present disclosure.

### [Industrial Applicability]

The technology disclosed herein is useful for a control device for a rotation output device with a rotary shaft.

### [Description of Reference Signs and Numerals]

- 1:: engine (rotation output device)
- 3:: piston
- 6:: injector (actuator)
- 10:: central computing device
- 15:: crankshaft (rotary shaft)
- 23:: intake electric S-VT (actuator)
- 24:: exhaust electric S-VT (actuator)
- 25:: spark plug (actuator)
- 43:: throttle valve (actuator)
- 45:: electromagnetic clutch (actuator)
- 54:: EGR valve (actuator)
- 102:: memory (storage unit)
- 102a:: cylinder state estimation model
- 102b:: ignition model
- 102c:: fuel supply model
- 110:: integrated circuit
- 111:: spark plug IC
- 112:: injector IC
- A:: actuator
- CL:: communication line (communication path)
- SW7:: crank angle sensor (phase angle detection unit)

## Claims

1. A control device for a rotation output device (1) with a rotary shaft (15), the control device comprising:
an integrated circuit (110) configured to receive a control signal from a central computing device (10) via a communication path (CL) and to operate an actuator (A) of the rotation output device (1) based on the received control signal,
wherein the central computing device (10) has a storage unit (102) in which a model (102a,102b,102c) representing an operation pattern of the actuator (A) is stored,
the control signal is a signal including a desired operation pattern of the actuator (A) that is based on the model (102a,102b,102c) and a desired operation start time (Tr1,Tr2) of the desired operation pattern, and
the integrated circuit (110) controls an operation of the actuator (A) using the desired operation pattern at the desired operation start time (Tr1,Tr2) and receives the control signal representing a next operation pattern and an operation start time (Tr1,Tr2) of the next operation pattern after the desired operation pattern is executed or while the desired operation pattern is executed.

2. The control device for a rotation output device (1) according to claim 1, further comprising:
a phase angle detection unit (SW7) configured to detect a phase angle of the rotary shaft (15),
wherein the desired operation start time (Tr1,Tr2) contained in the control signal is set as a phase angle of the rotary shaft (15), and
the integrated circuit (110) controls the operations of the actuator (A) using a corresponding operation pattern when the phase angle of the rotary shaft (15) reaches the phase angle corresponding to the operation start time (Tr1,Tr2) contained in the control signal.

3. The control device for a rotation output device (1) according to claim 2,
wherein the rotation output device (1) is an internal combustion engine (1) that rotates a crankshaft (15) as the rotary shaft (15) by reciprocating motion of a piston (3),
wherein preferably, the desired operation start time (Tr1,Tr2) is set to a top dead center or a bottom dead center of the piston (3) or to a phase angle defined with respect to a top dead center or a bottom dead center of the piston (3) .

4. The control device for a rotation output device (1) according to any one of claims 1 to 3,
wherein the integrated circuit (110) generates an electric signal representing the desired operation pattern based on the control signal received from the central computing device (10) and outputs the generated electric signal to the actuator (A) or a plurality of actuators (6,23,24,25,43,45,54).

5. The control device for a rotation output device (1) according to any one of the preceding claims,
wherein the control device is part of a vehicle (AM), in particular of an automobile (AM), and/or
wherein the vehicle (AM) adopts a by-wire system that electrically performs drive control, braking control, and/or steering control, and/or
wherein the rotation output device (1) is an engine (1), a drive motor (1) or a transmission (1).

6. The control device for a rotation output device (1) according to any one of the preceding claims,
wherein the control signal is sent in advance of the desired operation start time (Tr1,Tr2) from the central computing device (10) to the integrated circuit (110) that controls the actuator (A).

7. The control device for a rotation output device (1) according to any one of the preceding claims,
comprising a plurality of actuators (6,23,24,25,43,45, 54) controlled by the central computing device (10) via control signals sent to respective integrated circuits (110), wherein the actuators (6,23,24,25,43,45,54) in particular comprise a plurality of spark plugs and/or a plurality of fuel injectors and/or wherein the integrated circuits (110) preferably comprise at least a spark plug integrated circuit (111) and an injector integrated circuit (112).

8. The control device for a rotation output device (1) according to claim 7,
wherein the integrated circuits (111,112) have the same structure.

9. The control device for a rotation output device (1) according to claim 7,
wherein the central computing device (10) is configured to transmit the control signals to the integrated circuits (111,112) in a time division manner, and/or
wherein the central computing device (10) is configured to assign identification numbers to the control signals in advance so that the integrated circuits (111,112) can receive the control signals by recognizing the identification numbers.

10. The control device for a rotation output device (1) according to any one of the preceding claims,
wherein the central computing device (10) is configured to use a cylinder state estimation model (102a) based on information from sensors (SW1,SW2,SW3,SW9,SW10),
wherein preferably the central computing device (10) is configured to correct the cylinder state estimation model (102a) according to the difference between a cylinder temperature calculated based on the cylinder state estimation model (102a) and a cylinder temperature calculated based on the detection result of a cylinder pressure sensor (SW5).

11. The control device for a rotation output device (1) according to claim 10,
wherein the central computing device (10) is configured to use a predetermined ignition model (102b) to calculate the target ignition time (t1) of a spark plug (25) so as to achieve a target autoignition time (t1) and is further configured to generate an ignition control signal comprising an operation start time of the ignition pattern (Tr1),
wherein preferably the predetermined ignition model (102b) is configured to receive information from the cylinder state estimation model (102a).

12. The control device for a rotation output device (1) according to claim 10 and 11,
wherein the central computing device (10) is configured to use a predetermined fuel supply model (102c) to calculate a fuel injection amount and to calculate a start time (t3) of an injection and is further configured to generate an injection control signal comprising an operation start time of the injection pattern (Tr2),
wherein preferably the predetermined fuel supply model (102c) is configured to receive information from the cylinder state estimation model (102a).

13. The control device for a rotation output device (1) according to any one of the preceding claims,
wherein the rotation output device (1) performs a SPCCI combustion in which spark ignition (SI) combustion is combined with compression ignition (CI) combustion in operating regions,
wherein the central computing device (10) generates control signals for a plurality of actuators (6,23,24,25,43,45,54) using models (102a,102b,102c) stored in a memory (102) of the central computing device (10) based on information obtained from sensors (SW1 to SW12) so as to achieve the SPCCI combustion in the operating regions.

14. A method for controlling a control device of a rotation output device (1), in particular a control device according to any of the preceding claims, the control device comprising:
an integrated circuit (110) configured to receive a control signal from a central computing device (10) via a communication path (CL) and to operate an actuator (A) of the rotation output device (1) based on the received control signal,
wherein the central computing device (10) has a storage unit (102) in which a model (102a,102b,102c) representing an operation pattern of the actuator (A) is stored,
the control signal is a signal including a desired operation pattern of the actuator (A) that is based on the model (102a,102b,102c) and a desired operation start time (Tr1,Tr2) of the desired operation pattern, and
wherein the method comprises
controlling an operation of the actuator (A) by the integrated circuit (110) using the desired operation pattern at the desired operation start time (Tr1,Tr2) and receiving the control signal by the integrated circuit (110), the control signal representing a next operation pattern and an operation start time (Tr1,Tr2) of the next operation pattern after the desired operation pattern is executed or while the desired operation pattern is executed.

15. A computer program product to be installed in the control device of any one of claims 1 to 13 and to execute the method of claim 14.
